# EUROPÄISCHE PATENTANMELDUNG

(11) **EP 2 657 656 A1**
(43) Veröffentlichungstag der Anmeldung: **30.10.2013**
(21) Anmeldenummer: 12003037.4
(22) Anmeldetag: 27.04.2012
(51) Int. Cl.: G01F 1/115, G01P 5/06

(54) **Vorrichtung zur Bestimmung der Strömungsgeschwindigkeit eines Mediums**

(71) Anmelder: SIKA Dr.Siebert & Kühn GmbH & Co. KG., 34260 Kaufungen (DE)
(72) Erfinder: Siebert, Christian, 34131 Kassel (DE); Trinter, Frank Dr., 34260 Kaufungen (DE)
(74) Vertreter: Walther, Robert

(57) **Zusammenfassung**

Vorrichtung zur Bestimmung der Strömungsgeschwindigkeit eines Mediums, z. B. einer Flüssigkeit oder eines Gases, umfassend ein Gehäuse mit einem von dem Medium durchströmten Kammer, mit einem in der Kammer angeordneten Stützkörper zur drehbaren Aufnahme eines Flügelrades, wobei die Vorrichtung einen Impulsgeber und einen Impulsaufnehmer aufweist, wobei durch das Flügelrad der Impulsgeber aufgenommen ist, wobei der Impulsaufnehmer im Stützkörper derart angeordnet ist, dass die Übertragung des Impulses des Impulsgebers zu dem Impulsaufnehmer in Richtung der Längsachse der Kammer erfolgt.

## Beschreibung

Die Erfindung betrifft eine Vorrichtung zur Bestimmung der Strömungsgeschwindigkeit eines Mediums, z. B. einer Flüssigkeit oder eines Gases umfassend ein Gehäuse mit einer von dem Medium durchströmten Kammer mit einem in der Kammer angeordneten Stützkörper zur drehbaren Aufnahme eines Flügelrades, wobei die Vorrichtung einen Impulsgeber und einen Impulsaufnehmer aufweist, wobei durch das Flügelrad der Impulsgeber aufgenommen ist.

Vorrichtungen zur Bestimmung der Strömungsgeschwindigkeit eines Mediums sind aus dem Stand der Technik hinreichend bekannt. So ist beispielsweise aus der DE 41 11 001 A1 eine Vorrichtung bekannt, in der in einer Bohrung eines Gehäuses ein Flügelrad angeordnet ist, das durch ein strömendes Medium in Drehung versetzt wird. Zur Ermittlung der Rotationsgeschwindigkeit befinden sich an den Enden der Flügel Magnete, wobei durch die Magnete in einer im Gehäuse angeordneten Spule eine Spannung induziert wird. Durch die Zählung der Spannungsimpulse in der Spule, die durch die magnetisch ausgebildeten Flügel des Flügelrades hervorgerufen werden, kann die Rotationsgeschwindigkeit des Flügels ermittelt werden. Die Rotationsgeschwindigkeit stellt hierbei ein Maß für die Strömungsgeschwindigkeit des Mediums dar, wobei in Verbindung mit dem Querschnitt die Durchflussmenge bestimmbar ist.

Die in der US 5,372,048 A beschriebene Vorrichtung zeigt ein Gehäuse mit einem Flügelrad, wobei die Lagerung des Flügelrades durch eine Achse erfolgt. Das Flügelrad selbst besitzt auf seinem äußeren Umfang einen Magnetkäfig, der als Impulsgeber für eine im Gehäuse angeordnete Spule dient, um die Drehzahl des Flügelrades zu ermitteln.

Die zuvor beschriebenen Durchflussmengenmesser werden häufig in flüssigkeitsführenden Systemen eingesetzt, wobei die Flüssigkeit Teilchen enthält, die eisenhaltig sind. Die Folge hiervon ist, dass sich die eisenhaltigen Teilchen an den Magneten anlagern, wobei dann in Abhängigkeit von dem Grad der Menge an angelagerten eisenhaltigen Teilchen sich das Flügelrad zu einem bestimmten Zeitpunkt nicht mehr dreht, da sich das Flügelrad aufgrund der Anlagerungen in dem Gehäuse verklemmt.

Aus der EP 0 983 487 B1 ist eine Vorrichtung der eingangs genannten Art bekannt, wobei ein Gehäuse mit einer von dem Medium axial durchströmten Kammer zur Aufnahme eines Flügelrades vorgesehen ist. Das Flügelrad besitzt hierbei einen Trägerkörper zur Aufnahme der Flügel des Flügelrades, wobei der Trägerkörper zentrisch eine Bohrung aufweist, wobei die Achse in der mediendurchströmten Kammer fliegend gelagert ist. Die Achse wird hierbei durch einen vorgelagerten Drallkörper nach Art einer Lochscheibe aufgenommen. Der Trägerkörper besitzt an seinem freien Ende einen Magneten, wobei das Gehäuse der Vorrichtung in radialer Richtung zu dem Magneten eine Spule aufweist, die als Impulsaufnehmer für den Magneten als Impulsgeber fungiert. Um sicherzustellen, dass die von Magneten abgegebenen Impulse bei jeder Drehung auch von der Spule erfasst werden, ist erforderlich, dass der radiale Abstand zwischen Magnet und Spule möglichst gering ist. Nun ist es auch hier so wie beim zuvor abgehandelten Stand der Technik, dass sich bei Einsatz eines solchen Durchflussmessers in einem Medium, das eisenhaltige Partikel aufweist, sich derartige Partikel unmittelbar im Bereich des Magneten am Trägerkörper ansammeln werden. Dies ist relativ unkritisch, solange der Magnet nur relativ schwach ausgebildet ist, und entsprechend der Abstand zur Spule nur gering ist. Dies ist insbesondere dann der Fall, wenn der Durchmesser der Durchflusskammer eine geringe Nennweite aufweist. Werden allerdings größere Nennweiten erforderlich, dann vergrößert sich der Abstand zwischen dem Magneten als Impulsgeber und dem Impulsaufnehmer, beispielsweise der Spule, in radialer Richtung. Die Folge hiervon ist, dass der Magnet größer und infolgedessen auch stärker ausgebildet sein muss. Die Folge hiervon ist wiederum, dass sich um so mehr eisenhaltige Teilchen an dem Magneten absetzen werden. Es hat sich herausgestellt, dass dies teilweise zu einer erheblichen Gewichtszunahme führt, was insbesondere vor dem Hintergrund relevant ist, dass das Flügelrad durch die Achse fliegend gelagert drehbar aufgenommen ist. Das heißt, ein erhöhtes Gewicht am Magneten sorgt für ein erhöhtes Moment auf die Lagerung der Achse, was einem vorschnellen Verschleiß Vorschub leistet.

Die der Erfindung zugrunde liegende Aufgabe besteht demzufolge darin, eine Vorrichtung der eingangs genannten Art bereitzustellen, bei der die Dimensionierung des Impulsgebers unabhängig von dem Nenndurchmesser der von dem Medium durchflossenen Kammer ist.

Zur Lösung der Aufgabe wird erfindungsgemäß vorgeschlagen, dass der Impulsaufnehmer im Stützkörper derart angeordnet ist, dass die Übertragung des Impulses des Impulsgebers zu dem Impulsaufnehmer in Richtung der Längsachse der Kammer erfolgt. Beim Stand der Technik ist es so, dass zwischen Impulsgeber einerseits und dem Impulsaufnehmer andererseits ein Abstand in radialer Richtung besteht, d. h., dass der Nenndurchmesser unmittelbar Einfluss auf die Dimensionierung zumindest des Impulsgebers hat, denn mit steigendem Abstand muss die Stärke des Impulses ebenfalls entsprechend steigen. Dadurch, dass Impulsgeber und Impulsnehmer in der Längsachse der von dem Medium durchströmten Kammer hintereinander angeordnet sind, ist die Dimensionierung des Impulsgebers völlig unabhängig von dem gewählten Nenndurchmesser der von dem Medium durchströmten Kammer. Da die Längsachse der Kammer parallel zur Strömungsrichtung verläuft, erfolgt insofern auch die Messung in Strömungsrichtung. Das heißt, dass in Strömungsrichtung gesehen der Impulsgeber vorzugsweise dem Impulsaufnehmer vorgelagert ist.

Vorteilhafte Merkmale und Ausgestaltungen der Erfindung ergeben sich aus den Unteransprüchen.

Es wurde bereits darauf hingewiesen, dass der Impulsgeber und der Impulsaufnehmer hintereinander angeordnet sind; vorteilhaft ist in diesem Zusammenhang, wenn der Impulsgeber und Impulsaufnehmer im Wesentlichen fluchtend zueinander angeordnet sind.

Als besonders vorteilhaft hat sich herausgestellt, wenn als Impulsgeber ein Magnet verwendet wird, wobei der Magnet insbesondere ring- oder scheibenförmig ausgebildet ist. Der Impulsaufnehmer kann hierbei als Magnetfeldsensor, z. B. als Hallsensor oder AMR-Sensor, ausgebildet sein. Vorteilhaft ist weiterhin, wenn insbesondere bei Verwendung eines AMR-Sensors der Magnet mehrpolig ausgebildet ist. Vorteilhaft hieran ist, dass eine höhere Pulsdichte erzielt wird, was zu einer höheren Signaldichte führt, was die Auswertung erleichtert. Auch können sich hiermit leicht Beschädigungen im Rundlauf des Flügelrades ermitteln lassen, uns zwar insofern, als bei einem nicht rundlaufenden Flügelrad sich ein ungleichmäßiges Signalspektrum ergibt. Bei Verwendung eines Hallsensors kommt ein zweipoliger Magnet zum Einsatz.

Das Flügelrad, das durch eine in dem Stützkörper angeordnete Achse fliegend und drehbar gelagert ist, ist insbesondere zentrisch in der Kammer für den Durchlass des Mediums angeordnet. Durch eine zentrische Anordnung des Flügelrades in der vom Medium durchströmten Kammer wird eine gleichmäßige Beaufschlagung des Flügelrades erreicht, mit der Folge, dass eine gleichmäßige Signaldichte erzielt wird. Nach einem weiteren Merkmal der Erfindung ist der Stützkörper als Steg ausgebildet, der in die Kammer quer zur Strömungsrichtung zumindest hineinragt, vorteilhaft aber am oberen und am unteren Ende mit der die Kammer bildenden Hülse verbunden ist. Vorteilhaft hieran ist, dass ein solcher in der Kammer festeinsitzender Steg nicht zu Schwingungen neigt, was wiederum Auswirkungen auf die Laufruhe des Flügelrades hat.

In der Kammer dem Flügelrad in Strömungsrichtung gesehen vorgelagert ist eine Lochplatte vorgesehen, wobei die Aufgabe der Lochplatte darin besteht, als Düse zu fungieren, um hierdurch das Flügelrad auf eine möglichst hohe Drehzahl zu bringen.

Gegenstand der Erfindung ist ebenfalls, den auf dem Flügelrad angeordneten Magneten zur Energieerzeugung zu verwenden. In diesem Zusammenhang ist nach einer Ausführungsform vorgesehen, eine Spule mit einem Eisenkern in dem Stützkörper vorzusehen, wobei alternativ hierzu der Eisenkern durch Wiegand-Material ersetzt werden könnte. Bei Verwendung eines Wiegand-Drahtes würde hierbei die Ummagnetisierungsspannung abgegriffen, wobei bei einer Spule die drehzahlabhängige induzierte Spannung erfasst würde. Hiermit besteht bei Verwendung insbesondere eines zweipoligen Magneten auf dem Flügelrad die Möglichkeit, die Drehzahl zu ermitteln und parallel elektrische Energie zu erzeugen, um z. B. die Energie einer Auswerteelektronik zuzuführen.

Vorteilhaft weist der Stützkörper eine Anzahl weiterer Sensoren auf, insbesondere z. B. eines Temperatursensors oder eines Drucksensors. Hierzu kann der Stützkörper neben der Bohrung zur Aufnahme beispielsweise des Hallsensors eine weitere Bohrung für beispielsweise den Temperatur- oder Drucksensor zeigen.

Anhand der Zeichnungen wird die Erfindung nachstehend beispielhaft näher erläutert.

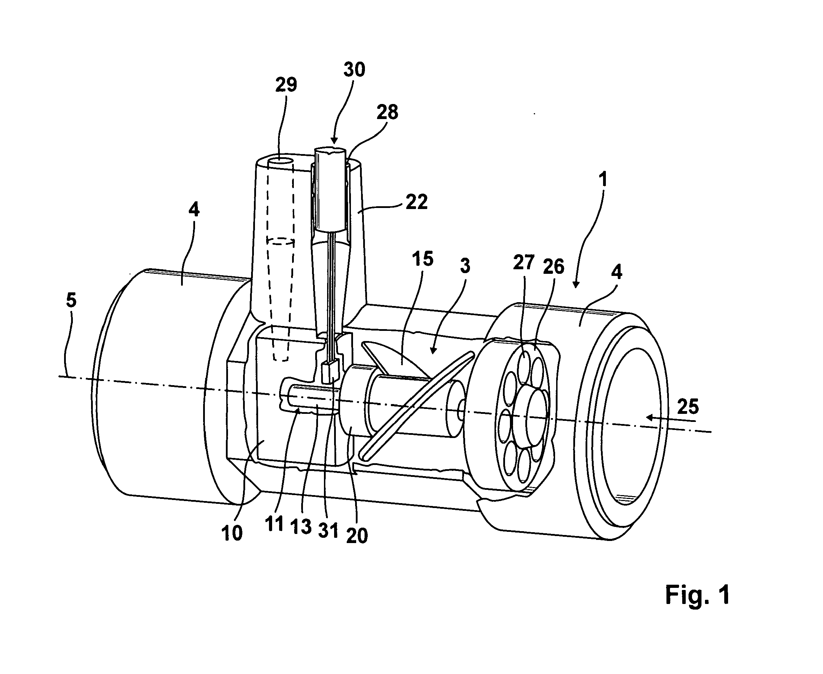

- Fig. 1: zeigt die Vorrichtung in perspektivischer Darstellung im Schnitt
- Fig. 2a: zeigt die Vorrichtung gemäß Fig. 1, wobei der Stützkörper eine Spule mit Eisenkern zeigt;
- Fig. 2b: zeigt einen Schnitt gemäß der Linie IIb-IIb aus Fig. 2a.

Die Vorrichtung, die insgesamt mit 1 bezeichnet ist, weist eine Kammer 3 auf, wobei sich an die Kammer 3 zu beiden Enden jeweils ein Anschlussflansch 4 anschließt. In der Kammer 3, die als zylindrisches Rohr ausgebildet ist, befindet sich der mit 10 bezeichnete Stützkörper. Der Stützkörper 10 ist als Steg ausgebildet, der die Kammer 3 quer zur Längsachse der Kammer durchragt, und an beiden Enden mit der Innenwandung der Kammer 3 verbunden ist. Das heißt, der Steg ist stabil durch die Kammer 3 aufgenommen. In der Mittellängsachse 5 der Kammer 3 befindet sich in dem Stützkörper 10 eine Bohrung 11 zur Aufnahme der feststehenden Achse 13, die von dem Stützkörper 10 aus frei in die Kammer 3 hineinkragt. Die Achse weist hierbei endseitig ein Flügelrad 15 auf, wobei auf der Achse in Strömungsrichtung gesehen hinter dem Flügelrad ein ringförmiger Magnet 20 angeordnet ist. In Strömungsrichtung gesehen (Pfeil 25) befindet sich dem Flügelrad 15 vorgelagert die Lochplatte 26, die umfangsverteilt mehrere Bohrungen 27 zeigt. Die Lochplatte verjüngt somit den freien Querschnitt, weshalb sie nach Art einer Düse wirkt.

Der Stützkörper 10, der sich quer zur Mittellängsachse 5 in die Kammer 3 hineinerstreckt, setzt sich nach außen hin in einem Dom 22 fort, der zwei Bohrungen 28 und 29 zeigt, wobei die Bohrung 28 der Aufnahme des als Impulsaufnehmers 30 wirkenden Sensors dient. Wesentlich hierbei ist, dass der eigentliche Sensor 31, z. B. ein Hallsensor im Wesentlichen in einer Flucht zu dem Magneten 20 liegt, und zwar in Strömungsrichtung (Pfeil 25) gesehen hinter dem Magneten 20. Die weitere Bohrung 29 dient der Aufnahme beispielsweise eines Temperatursensors.

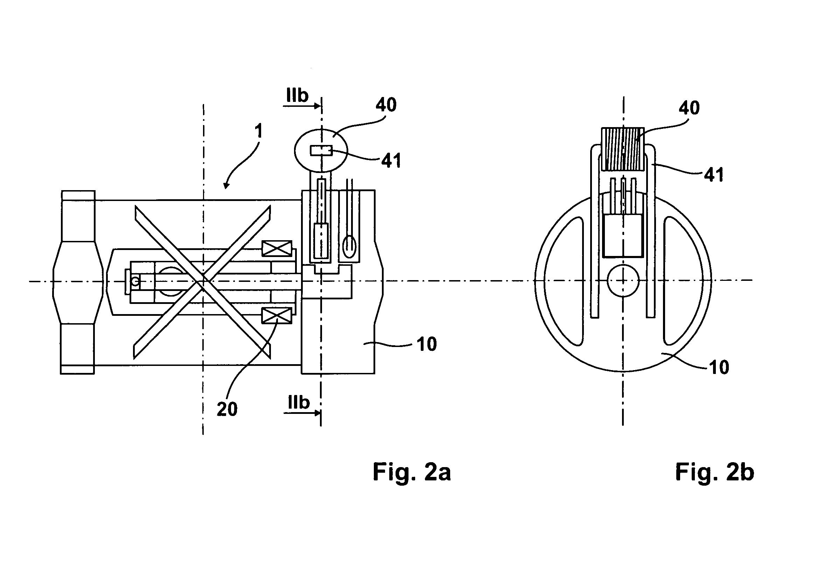

Alternativ wäre denkbar, wie sich dies aus Figur 2a und Figur 2b ergibt, in dem Stützkörper 10 eine Spule 40 mit einem Kern 41 aus Eisen anzuordnen, wobei alternativ der Kern auch aus einem Wiegand-Material hergestellt sein kann. In Verbindung mit einem zweipoligen Magneten 20 besteht dann nicht nur die Möglichkeit, die Drehzahl des Flügelrades zu ermitteln, sondern gleichzeitig eröffnet sich die Möglichkeit der Energieerzeugung. Die hierbei erzeuge Energie kann dem Betrieb einer Auswerteelektronik dienen. Insofern bestünde die Möglichkeit, auf diese Weise ein im Wesentlichen autarkes System bereitzustellen. Denkbar wäre auch, eine Batterie oder einen Kondensator vorzusehen, um über eine längere Zeit Energie zu speichern, die dann z. B. zur Anzeige der aktuellen Durchflussmenge einmal in einem bestimmten Zeitintervall abgerufen werden kann.

### Bezugszeichenliste:

- 1: Vorrichtung
- 3: Kammer
- 4: Anschlussflansch an der Kammer
- 5: Mittellängsachse
- 10: Stützkörper
- 11: Bohrung für Achse
- 13: Achse
- 15: Flügelrad
- 20: ringförmiger Magnet
- 22: Dom
- 25: Pfeil
- 26: Lochplatte
- 27: Bohrungen in der Lochplatte
- 28, 29: Bohrungen im Dom
- 30: Hallsensor
- 40: Spule
- 41: Kern

## Patentansprüche

1. Vorrichtung (1) zur Bestimmung der Strömungsgeschwindigkeit eines Mediums, z. B. einer Flüssigkeit oder eines Gases, umfassend ein Gehäuse mit einem von dem Medium durchströmten Kammer (3), mit einem in der Kammer (3) angeordneten Stützkörper (10) zur drehbaren Aufnahme eines Flügelrades (15), wobei die Vorrichtung einen Impulsgeber und einen Impulsaufnehmer aufweist, wobei durch das Flügelrad (15) der Impulsgeber aufgenommen ist,
**dadurch gekennzeichnet,**
**dass** der Impulsaufnehmer im Stützkörper (10) derart angeordnet ist, dass die Übertragung des Impulses des Impulsgebers zu dem lmpulsaufnehmer in Richtung der Längsachse der Kammer (3) erfolgt.

2. Vorrichtung nach Anspruch 1,
**dadurch gekennzeichnet,**
**dass** der Impulsgeber und der Impulsaufnehmer hintereinander angeordnet sind.

3. Vorrichtung nach einem der voranstehenden Ansprüche,
**dadurch gekennzeichnet,**
**dass** der Impulsgeber und der Impulsaufnehmer im Wesentlichen fluchtend zueinander angeordnet sind.

4. Vorrichtung nach einem der voranstehenden Ansprüche,
**dadurch gekennzeichnet,**
**dass** der Impulsgeber als Magnet (20) ausgebildet ist.

5. Vorrichtung nach einem der voranstehenden Ansprüche,
**dadurch gekennzeichnet,**
**dass** der Magnet (20) ring- oder plattenförmig ausgebildet ist.

6. Vorrichtung nach Anspruch 5,
**dadurch gekennzeichnet,**
**dass** der Magnet (20) zwei- oder mehrpolig ausgebildet ist.

7. Vorrichtung nach einem der voranstehenden Ansprüche,
**dadurch gekennzeichnet,**
**dass** der Impulsaufnehmer als Magnetfeldsensor, z. B. Hallsensor (30) ausgebildet ist.

8. Vorrichtung nach einem der voranstehenden Ansprüche,
**dadurch gekennzeichnet,**
**dass** das Flügelrad (15) durch eine in dem Stützkörper (10) angeordnete Achse (13) fliegend und drehbar gelagert ist.

9. Vorrichtung nach einem der voranstehenden Ansprüche,
**dadurch gekennzeichnet,**
**dass** das Flügelrad (15) zentrisch in der Kammer (3) angeordnet ist.

10. Vorrichtung nach einem der voranstehenden Ansprüche,
**dadurch gekennzeichnet,**
**dass** der Stützkörper (10) als Steg ausgebildet ist, der in die Kammer (3) quer zur Strömungsrichtung zumindest hineinragt.

11. Vorrichtung nach einem der voranstehenden Ansprüche,
**dadurch gekennzeichnet,**
**dass** in der Kammer (3) dem Flügelrad (15) in Strömungsrichtung gesehen vorgelagert eine Lochplatte (26) angeordnet ist.

12. Vorrichtung nach einem der voranstehenden Ansprüche,
**dadurch gekennzeichnet,**
**dass** der Stützkörper (10) eine Anzahl weiterer Sensoren aufweist.

13. Vorrichtung nach einem der voranstehenden Ansprüche,
**dadurch gekennzeichnet,**
**dass** der Stützkörper (10) am unteren und am oberen Ende mit der die Kammer (3) bildenden Hülse verbunden ist.

14. Vorrichtung nach einem der voranstehenden Ansprüche,
**dadurch gekennzeichnet,**
**dass** der Stützkörper (10) eine Spule (40) mit einem Eisenkern (41) aufweist.

15. Vorrichtung nach einem der voranstehenden Ansprüche,
**dadurch gekennzeichnet,**
**dass** der Stützkörper (10) eine Spule (40) mit einem Wiegand-Draht aufweist.
